# FASCICULE DE BREVET EUROPEEN

(11) **EP 3 164 586 B1**
(45) Date de publication et mention de la délivrance du brevet: **11.04.2018**
(21) Numéro de dépôt: 15738741.6
(22) Date de dépôt: 23.06.2015
(51) Int. Cl.: F02C 7/18

(54) **PROCÉDÉ DE DÉTECTION DE PANNE D'UNE VANNE DANS UN TURBOMOTEUR**
VERFAHREN ZUR ERKENNUNG EINES VENTILFEHLERS IN EINEM TURBINENMOTOR
METHOD FOR DETECTING A VALVE FAILURE IN A TURBINE ENGINE

(30) Priorité: 02.07.2014 FR 1456310
(43) Date de publication de la demande: 10.05.2017
(73) Titulaire: Safran Aircraft Engines, 75015 Paris (FR)
(72) Inventeur: PEROTIN, Laurent, F-77550 Moissy-Cramayel (FR); AMER, Mohamed, F-77550 Moissy-cramayel (FR); DJELASSI, Cédrik, F-77550 Moissy-cramayel (FR); TOUYA, Julie, F-77550 Moissy-cramayel (FR)
(74) Mandataire: Gevers & Orès
(86) Numéro de dépôt international: PCT/FR2015/051674
(87) Numéro de publication internationale: WO 2016/001520

(56) Documents cités:
- GB-A- 2 474 638
- US-A1- 2002 139 180

## Description

### Domaine de l'invention :

La présente invention se rapporte au domaine de la commande des débits de fluide dans une turbomachine. Elle concerne plus particulièrement le contrôle de l'état d'une vanne fonctionnant en tout ou rien dans l'un des circuits de gaz de la turbomachine.

### Etat de la technique :

Des vannes fonctionnant en tout ou rien sont utilisées dans les turbomachines, par exemple en amont d'un compresseur haute pression pour le décharger dans certains cas de fonctionnement du moteur ou dans des trompes à jet utilisant de l'air venant du flux primaire pour contrôler la dépressurisation des enceintes de lubrification des paliers et boites à engrenage de la turbomachine (assurant ainsi l'étanchéité de ces enceintes).

En raison des coûts ou des contraintes d'environnement, certaines de ces vannes ne sont pas surveillées par un capteur de retour de position. Il est cependant important de surveiller l'état de ces vannes, notamment afin d'isoler l'équipement à changer en cas de panne. De plus ces pannes, vanne bloquée ouverte ou fermée, peuvent être dormantes jusqu'à l'apparition d'un effet opérationnel.

Par exemple, la panne d'une vanne de décharge située en amont du compresseur peut engendrer des évènements moteurs tels que le pompage ou le dévissage. Plus un moteur est jeune, plus il a de marge au pompage et peut tolérer une telle panne. On ne peut donc pas assurer qu'une panne sur ce type de vanne aura automatiquement un impact opérationnel. Par contre, ce phénomène de dormance entraînera une usure prématurée du moteur et peut finir par l'endommager. Des effets de dormance similaires peuvent être observés aussi sur l'exemple concernant le circuit de dépressurisation des enceintes d'huile.

Il est donc important de surveiller la vanne au cours du fonctionnement de la turbomachine pour déterminer si elle doit être changée ou pas en retour d'opération. De plus, en cas d'événement moteur à investiguer (par exemple un pompage), cela permet d'orienter l'opérateur de maintenance en incriminant la vanne en panne et ainsi de réduire les temps d'intervention de la maintenance.

Des procédés existent pour vérifier la réalité de la commutation de telles vannes en observant l'évolution d'une variable d'état du moteur sensible à l'état de la vanne, même en l'absence de conséquences opérationnelles. Par exemple, le document EP1978223 observe l'évolution de la température des gaz de sortie du réacteur après la commande d'une vanne de décharge. Dans un autre exemple, EP1926009, concernant une vanne de décharge, c'est l'évolution de la pression de sortie du compresseur qui est observée. Un autre exemple est donné dans le document GB2474638. Les documents cités utilisent tout d'abord des méthodes de filtrage qui permettent d'enlever une partie du bruit et d'isoler les évènements caractéristiques. Dans ces méthodes, la signature d'une commutation de vanne de décharge apparaît ainsi comme un pic prononcé sur le signal. Cependant, en utilisation opérationnelle, le fonctionnement du moteur est rarement stabilisé, par exemple une évolution du régime moteur ou le déclenchement d'un autre équipement peut modifier l'évolution de la variable observée. Pour dégager les effets de l'environnement, les méthodes citées adaptent le seuil de détection du pic aux conditions opérationnelles ou inhibent la détection en cas d'événements parasites tels que le déclenchement d'une autre vanne.

Cependant, en particulier pour éviter la détection de fausses pannes sur les vannes, qui entraîneraient une opération de maintenance inutile, les méthodes connues se heurtent à deux difficultés. D'une part, il n'est pas toujours possible de prendre en compte tous les évènements d'environnement car les informations les concernant ne sont pas toujours disponibles. De plus, même en adaptant le seuil en fonction de l'environnement, l'effet, ou plutôt l'absence d'effet, de la commande de commutation peut être difficile à identifier dans le signal global.

L'invention a pour objet d'apporter un moyen de répondre aux difficultés rencontrées pour identifier de manière plus sûre l'effet d'une panne de commutation de vanne sur l'évolution d'un paramètre pertinent de la turbomachine en s'affranchissant des perturbations dues aux évolutions de l'environnement. En particulier l'invention cherche à éviter la détection de fausses pannes tout en permettant de préparer le remplacement de la vanne surveillée quand c'est nécessaire.

### Exposé de l'invention :

L'invention propose à cet effet un procédé de surveillance d'une vanne dans un turbomoteur selon la revendication 1, ladite vanne commutant, en fermeture et/ou ouverture, en réponse à une commande envoyée à un instant déterminé, ledit procédé comportant une étape de calcul d'une première forme d'un signal temporel à partir de l'évolution d'une variable d'état dudit turbomoteur réagissant à une commutation de ladite vanne, puis une étape d'application d'un test de signature de la commutation de la vanne à une deuxième forme dudit signal calculée à partir de ladite première forme. Ledit procédé est remarquable en ce qu'il comporte en outre une étape dans laquelle est défini un intervalle de temps après l'envoi de ladite commande pour effectuer ledit test de signature, et en ce que, l'évolution d'un ou plusieurs autres paramètres que la commutation de la vanne étant connue et l'évolution dudit signal temporel en réponse à l'évolution dudit ou desdits autres paramètres étant calculable, ledit procédé comporte une étape, dite de désensibilisation, dans laquelle ladite deuxième forme du signal est calculée à partir de la première forme du signal en lui retranchant l'évolution calculée du signal à partir de l'évolution dudit ou desdits autres paramètres, sur ledit intervalle de temps après une commande.

La définition d'un intervalle de temps après l'envoi de la commande permet de concentrer la surveillance de la vanne sur la partie du signal correspondant aux effets attendus d'une commutation après la commande. En correspondance avec cela, le procédé peut rechercher un signal corrélé à la commande de vanne sur cet intervalle de temps pour éviter de prendre en compte des phénomènes extérieurs lorsqu'il applique le test de signature de la commutation de la vanne. Cette caractéristique permet d'éviter d'envoyer des alarmes de détection de panne qui entraîneraient une opération de maintenance inutile, alors que la vanne fonctionne.

L'étape dite de désensibilisation permet d'obtenir une signature beaucoup plus caractéristique de la commutation de la vanne. Cela permet, dans certains cas, de ne pas paramétrer le test de signature en fonction des conditions d'utilisation du turbomoteur au moment de la commutation de vanne.

En général, ledit signal représente la dérivée temporelle de ladite variable d'état, de préférence filtrée. En effet, les variations de cette dérivée s'apparentent à un créneau, plus facile à caractériser que les variations de la variable d'état, qui peuvent être masquées par une évolution transitoire.

En particulier, ladite variable d'état peut être une pression de gaz dans un circuit du turbomoteur. La signature du fonctionnement de la vanne peut correspondre au test de passage du signal par un pic de valeur devant dépasser un seuil déterminé, dans un sens positif ou négatif. Un délai déterminé peut être introduit entre l'envoi de la commande de la commutation de vanne et ledit intervalle de temps. Cela permet de prendre en compte le temps de réponse de l'installation à la commutation de la vanne.

Avantageusement, ledit procédé comprend un test dans l'étape de détermination de l'intervalle de temps pour ne pas lancer les étapes ultérieures si deux commandes de commutation opposées de la vanne se succèdent dans un laps de temps déterminé. Cela permet d'éviter des fausses mesures où la vanne ne bouge pas à cause de son temps de réaction à la commande.

En particulier, dans une première variante, le procédé peut déterminer ladite deuxième forme de signal comme étant ladite première forme de signal après l'étape de désensibilisation.

Dans une deuxième variante, le procédé comprend en outre une étape dans laquelle une panne confirmée est identifiée si une absence de réponse a été obtenue dans l'étape d'application du test de signature pour une série de n commandes consécutives incluant la commande en cours, n étant supérieur ou égal à deux, l'absence de panne confirmée est identifiée dans le cas contraire.

Cette deuxième variante permet de prendre en compte l'occurrence aléatoire d'événements perturbant la mesure de la variable à partir de laquelle est créé le signal testé. Il privilégie le fait de maintenir l'exploitation du turbomoteur si l'on n'est pas sûr de l'occurrence d'une panne à celui de détecter ladite panne, celle-ci ayant de fortes chances d'être détectée lors de la séquence de surveillance suivante si elle est avérée. Le nombre n, étant égal à deux lorsqu'on décide qu'une seule répétition d'absence de signal pour deux commandes consécutives est suffisante pour confirmer une panne, peut être ajusté en fonction des probabilités d'occurrence d'événements non modélisés.

Avantageusement, un tel procédé comporte une étape de mise en mémoire du résultat de l'application du test de signature. Cela peut permettre notamment, de consulter cette mémoire après une opération pour connaître l'historique de la vanne.

Un tel procédé peut être appliqué à une installation dans lequel ladite vanne est une vanne de l'alimentation d'une trompe à jet dépressurisant au moins une enceinte d'huile du turbomoteur. Dans ce cas, la variable d'état est la pression dans un circuit d'alimentation en huile de ladite enceinte, et le procédé utilise une étape de désensibilisation, l'autre paramètre influençant ledit signal étant la vitesse de rotation du turbomoteur.

Un deuxième mode de réalisation de l'invention concerne un procédé de surveillance d'une vanne dans un turbomoteur, ladite vanne commutant, en fermeture et/ou ouverture, en réponse à une commande envoyée à un instant déterminé, ledit procédé comportant une étape de calcul d'une première forme d'un signal temporel à partir de l'évolution d'une variable d'état dudit turbomoteur réagissant à une commutation de ladite vanne, puis une étape d'application d'un test de signature de la commutation de la vanne à une deuxième forme dudit signal calculée à partir de ladite première forme. Ledit procédé est remarquable en ce qu'il comporte en outre une étape dans laquelle est défini un intervalle de temps après l'envoi de ladite commande pour effectuer ledit test de signature, et en ce que, ledit procédé comporte une étape dans laquelle une panne confirmée est identifiée si une absence de réponse a été obtenue dans l'étape d'application du test de signature pour une série de n commandes consécutives incluant la commande en cours, n étant supérieur ou égal à deux, l'absence de panne confirmée est identifiée dans le cas contraire.

Avantageusement, la deuxième forme de signal est égale à la première forme de signal.

Lorsque l'évolution d'un ou plusieurs autres paramètres que la commutation de la vanne est connue et que l'évolution dudit signal temporel en réponse à l'évolution dudit ou desdits autres paramètres est calculable, ledit procédé peut comporter une étape, dite de désensibilisation, dans laquelle ladite deuxième forme du signal est calculée à partir de la première forme du signal en lui retranchant l'évolution calculée du signal à partir de l'évolution dudit ou desdits autres paramètres, sur ledit intervalle de temps après une commande.

Ce deuxième mode de réalisation permet de prendre en compte l'occurrence aléatoire d'événements perturbant la mesure de la variable à partir de laquelle est créé le signal testé. Il privilégie le fait de maintenir l'exploitation du turbomoteur si l'on n'est pas sûr de l'occurrence d'une panne à celui de détecter ladite panne, celle-ci ayant de fortes chances d'être détectée lors de la séquence de surveillance suivante si elle est avérée. Le nombre n, étant égal à deux lorsqu'on décide qu'une seule répétition d'absence de signal pour deux commandes consécutives est suffisante pour confirmer une panne, peut être ajusté en fonction des probabilités d'occurrence d'événements non modélisés.

La définition d'un intervalle de temps après l'envoi de la commande a les mêmes fonctions que celles décrites pour le mode de réalisation précédent. De même, dans le deuxième mode de réalisation :
- ledit signal peut représenter la dérivée temporelle de ladite variable d'état, de préférence filtrée,
- ladite variable d'état peut être une pression de gaz dans un circuit du turbomoteur,
- la signature du fonctionnement de la vanne peut correspondre au test de passage du signal par un pic de valeur devant dépasser un seuil déterminé, dans un sens positif ou négatif,
- un délai déterminé peut être introduit entre l'envoi de la commande de la commutation de vanne et ledit intervalle de temps, et
- ledit procédé peut comprendre un test dans l'étape de détermination de l'intervalle de temps pour ne pas lancer les étapes ultérieures si deux commandes de commutation opposées de la vanne se succèdent dans un laps de temps déterminé.

Avantageusement, un tel procédé comporte une étape de mise en mémoire du résultat de l'application du test de signature. Cela peut permettre notamment, de consulter cette mémoire après une opération pour connaître l'historique de la vanne.

Un procédé selon l'invention peut également être appliqué à la surveillance du fonctionnement d'une vanne de décharge placée dans l'écoulement traversant un compresseur du turbomoteur. Dans ce cas, le procédé utilise le deuxième mode de réalisation, la variable d'état étant la pression mesurée dans l'écoulement traversant ledit compresseur et la commutation correspondant à la commande de ladite vanne étant la fermeture.

### Brève description des figures :

La présente invention sera mieux comprise et d'autres détails, caractéristiques et avantages de la présente invention apparaîtront plus clairement à la lecture de la description qui suit, en référence aux dessins annexés sur lesquels :
La figure 1a présente l'évolution au cours du temps d'une fonction d'une variable moteur lors de la fermeture d'une vanne.
La figure 1b présente l'évolution au cours du temps d'une fonction d'une variable moteur lors de l'ouverture d'une vanne.
La figure 2 représente le schéma d'un premier exemple d'installation contenant une vanne dont on veut surveiller le fonctionnement.
La figure 3a et 3b présentent schématiquement le principe de l'élimination de l'influence de certains paramètres pour surveiller le fonctionnement de la vanne en observant l'évolution de la pression et de sa dérivée temporelle.
La figure 4 présente un résultat de l'application du principe présenté sur les figures 3a et 3b au fonctionnement de l'installation présentée en figure 2.
La figure 5 présente un premier mode de réalisation du procédé selon l'invention appliqué à l'installation présentée en figure 2.
La figure 6 présente un schéma fonctionnel d'un dispositif mettant en oeuvre le premier mode de réalisation d'un procédé selon l'invention, dans l'installation présentée en figure 2.
La figure 7 représente le schéma d'un deuxième exemple d'installation contenant une vanne dont on veut surveiller le fonctionnement.
Les figures 8a à 8c présentent l'évolution d'une variable de pression dans l'installation en réponse au fonctionnement de la vanne pour diverses conditions d'environnement.
La figure 9 présente un deuxième mode de réalisation d'un procédé selon l'invention appliqué à l'installation présentée en figure 7.
La figure 10 présente un schéma fonctionnel d'un dispositif mettant en oeuvre le deuxième mode de réalisation d'un procédé selon l'invention, dans l'installation présentée en figure 7.
La figure 11 présente une variante de réalisation combinant les premier et deuxième modes de réalisation présentés.

### Description détaillée de l'invention :

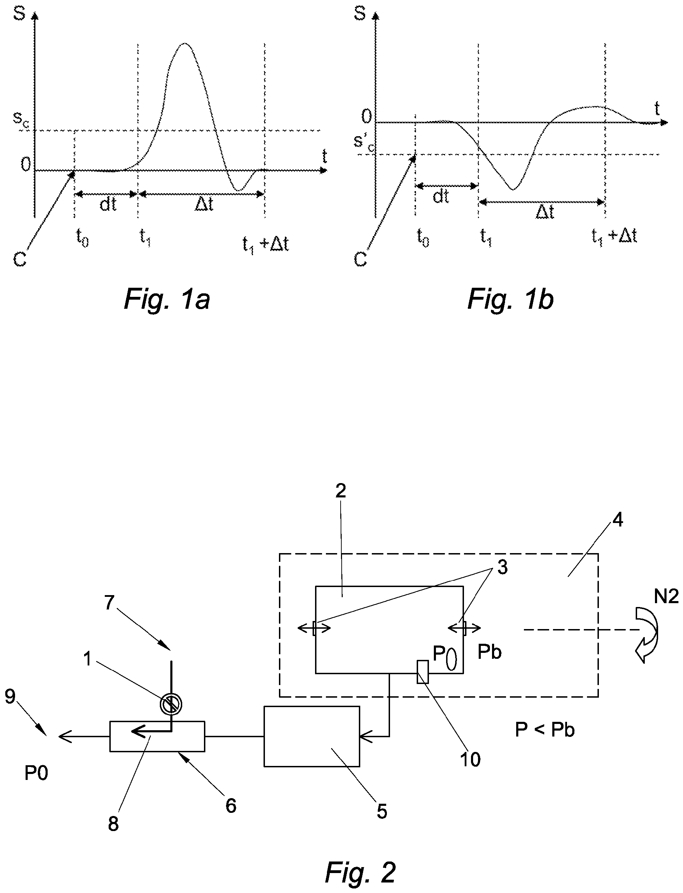

En référence aux figures 1a et 1b, l'invention concerne un procédé utilisant un test sur un signal S lié à l'évolution d'une variable d'état V du moteur lors d'un changement d'état de la vanne surveillée. Le test correspond alors à l'identification d'une signature caractéristique de l'évolution du signal S en fonction du temps t après une commande C de commutation de la vanne.

La variable V peut être par exemple une pression de gaz mesurée en un endroit du circuit moteur comportant la vanne et le signal S peut représenter la dérivée temporelle dvd/ddt de l'évolution de cette variable. En général, le signal S représente la dérivée temporelle normalisée (dVd/ddt)/V de la variable d'état, c'est-à-dire divisée par la valeur de la variable pour obtenir des valeurs relatives.

Sur la figure 1a, le moteur est en régime stabilisé avant la commande C de fermeture de la vanne qui se produit au temps t₀. La pression est donc constante et le signal S(t) est nul. Dans l'exemple considéré, la vanne ferme une sortie du circuit, sa fermeture entraine donc une hausse de pression qui se stabilise à une autre valeur.

Compte tenu des temps de réponse de l'ensemble du système, l'évolution du signal S(t) est particulièrement significative après un délai ddt, sur un intervalle de temps [t₁, t₁ + Δt], où t₁= t₀ + dt. Dans l'intervalle [t₁, t₁ + Δt], la signature de la fermeture de vanne correspond à un pic positif sur le signal S(t) qui passe systématiquement au-dessus d'une valeur de seuil S_{c} lorsque la vanne se ferme, ce seuil S_{c} étant suffisamment éloigné de zéro pour ne pas pouvoir être atteint quand la vanne ne commute pas.

Sur l'exemple considéré, le test utilisé par le procédé correspond donc au fait de lancer l'observation du signal S(t) sur un intervalle de temps [t₁, t₁ + Δt] après l'envoi de la commande C de commutation de la vanne au temps t₀, puis de vérifier l'existence ou l'absence de signature d'une commutation effective de la vanne sur le signal S(t) en testant le fait qu'il traverse un seuil S_{c} sur l'intervalle de temps [t₁, t₁ + Δt].

La commutation de la vanne en ouverture peut également avoir une signature remarquable. La figure 1b illustre le cas où l'ouverture de la vanne entraîne une baisse de pression par rapport au régime stabilisé. De manière sensiblement symétrique au cas précédent, le signal S(t) passe alors dans l'intervalle de temps [t₁, t₁ + Δt] par un pic négatif traversant un seuil S'_{c}. Le test utilisé par le procédé surveille donc alors la traversée de ce seuil S'_{c} durant l'intervalle de temps [t₁, t₁ + Δt].

La présentation du test a été faite dans le cas où la variable est la pression mais d'autres variables caractéristiques du moteur peuvent être utilisées pour créer le signal S(t), suivant les fonctions remplies par la vanne surveillée. Ce peut être par exemple, la température de gaz en sortie du générateur de gaz primaire.

Par ailleurs, l'invention prend en compte des perturbations par rapport au cas simplifié qui vient d'être présenté. En effet, le moteur peut changer de régime et des évènements extérieurs peuvent perturber l'évolution de la variable à partir de laquelle l'état de la vanne est surveillé. Le procédé est conçu pour détecter une panne de la vanne en réponse à une commande C de commutation durant les différentes phases d'utilisation du moteur.

La façon dont l'invention permet de rendre plus fiable la détection d'une panne à partir du test précédent est présentée ci-après sur deux exemples utilisant la pression comme variable significative de l'état de la vanne surveillée.

### Premier mode de réalisation

Le premier exemple de mise en oeuvre de l'invention correspond à la surveillance d'une vanne 1 de dépressurisation des enceintes 2 d'huile d'un moteur 4.

Les caractéristiques de l'installation où fonctionne la vanne 1 sont illustrées sur la figure 2. L'étanchéité des joints 3 des enceintes 2 d'huile est assurée par une différence de pression (P-Pb) négative au travers de joints 3 avec le reste du moteur 4. Il s'avère nécessaire d'assurer cette différence de pression à certains régimes par une dépressurisation forcée. Le circuit d'huile comprend au moins une enceinte 2 où l'huile est surmontée par de l'air. Dans ce cas, la dépressurisation est réalisée par un système d'air de la façon suivante :
- L'air est aspiré par une trompe à jet 6 qui a pour rôle de créer une dépression dans les enceintes 2.
- Le circuit reliant la trompe à jet 6 aux enceintes 2 comprend généralement un déshuileur 5 pour déshuiler L'air huilé récupéré dans ces enceintes.
- De l'air sous pression, provenant du flux primaire 7 dans le moteur 4, est injecté dans la trompe à jet 6 par deux buses 8 pour créer le phénomène d'aspiration.
- L'air est rejeté dans le flux secondaire 9 du moteur 4.

Cette dépressurisation doit être régulée suivant les conditions de vol. Par exemple, à basse altitude et au démarrage, il est nécessaire d'avoir une forte aspiration pour dépressuriser les enceintes 2 et assurer l'étanchéité des joints 3, comme cela a été précédemment évoqué. Par contre, à haute altitude notamment, la pression P dans les enceintes 2 dépendant de la pression ambiante P0, le besoin de dépressurisation est plus faible. De plus, les enceintes 2 sont alimentées en huile par des pompes de récupération qui risquent de se désamorcer si la dépressurisation est trop forte.

La vanne 1 surveillée commande l'injection d'air primaire 7 dans la trompe à jet 6 en ouvrant ou fermant l'une des deux buses 8. Il y a deux configurations possibles :
- La vanne 1 de commande est fermée, l'air primaire 7 ne passe que par une buse 8 et la dépressurisation des enceintes 2 d'huile est faible.
- La vanne 1 est ouverte, l'air primaire 7 passe par les deux buses 8 et la dépressurisation des enceintes 2 d'huile est forte.

Une vanne 1 bloquée ouverte peut donc entraîner à haute altitude un désamorçage des pompes de récupération et un arrêt du moteur 4. Par contre, elle n'aura pas de conséquence en dessous d'une certaine altitude et donc, sera dormante dans ces conditions.

A contrario, une vanne 1 bloquée fermée aura pour conséquence une faible perte d'étanchéité au niveau des joints 3 et sera difficilement détectable sur le niveau d'huile. Elle sera donc également dormante pendant un certain temps.

Pour détecter ces pannes, le procédé selon l'invention applique le test précédemment décrit au signal S(t) obtenu à partir d'une mesure de la pression P(t) d'huile dans les enceintes 2, pendant un intervalle de temps [t₁, t₁ + Δt] après la commande C de commutation de la vanne 1 des buses 8 de la trompe à jet 6. Comme dans le cas représenté sur les figures 1a et 1b, le signal S(t) correspondant à une dérivée temporelle normalisée de la pression P(t) présente un pic traversant un seuil positif Sc lors de la fermeture de la vanne 1 et traversant un seuil négatif S'c lors de son ouverture. Les valeurs numériques des seuils Sc, S'c ainsi que les délais dt et Δt à partir de l'instant t₀ de l'envoi de la commande C de commutation de la vanne 1 sont ajustés en fonction des caractéristiques physiques de l'installation décrite sur la figure 2.

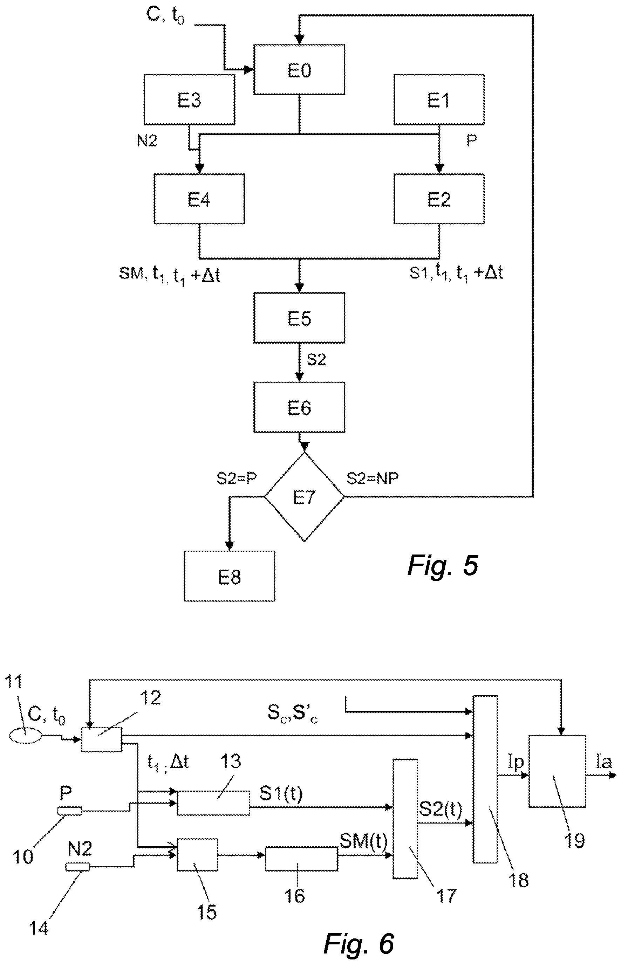

En référence à la figure 5 le procédé comporte donc une étape E0 initiale consistant à enregistrer l'occurrence d'une commande C de commutation de la vanne 1 à un instant t₀. En parallèle, une première étape E1 consiste à mesurer la pression P(t) avec un capteur 10 dans les enceintes 2 d'huile. Eventuellement, l'étape E1 est couplée à l'étape E0 pour ne démarrer les mesures que lorsqu'une commande C est envoyée.

Le procédé comporte ensuite une étape E2 qui fournit une première forme S1(t) du signal S(t) sur l'intervalle de temps [t₁, t₁ + Δt]. Cette étape E2 peut comporter plusieurs sous-étapes. En effet, l'étape E2 comporte le calcul de la dérivée temporelle normalisée S(t) de la pression P(t) à partir des mesures. Il s'agit dans ce calcul d'éliminer les erreurs dues à l'échantillonnage de mesure effectué au travers du capteur 10 et de supprimer des perturbations créant des oscillations parasites, notamment sur la dérivée temporelle. L'homme du métier pourra donc utiliser dans cette étape E2 un certain nombre de méthodes de filtrage qui sont utiles au procédé mais qui n'entrent pas dans l'invention.

Cependant, une détection de panne basée sur le test, tel que décrit en référence aux figures 1a ou 1b, appliqué au signal S1(t) obtenu directement à partir de la mesure de pression P dans les enceintes 2 d'huile n'est pas robuste. En effet, l'influence d'autres paramètres peut fausser la détection. Sur l'installation considérée, seul le régime du moteur 4 a une influence remarquable sur les évolutions rapides de pression P dans les enceintes 2. Une forte accélération ou une forte décélération de la vitesse de rotation du moteur 4 aura pour conséquence une forte variation de pression P qui peut masquer les effets d'un mouvement de la vanne 1 sur le signal S1(t), au sortir de l'étape E2.

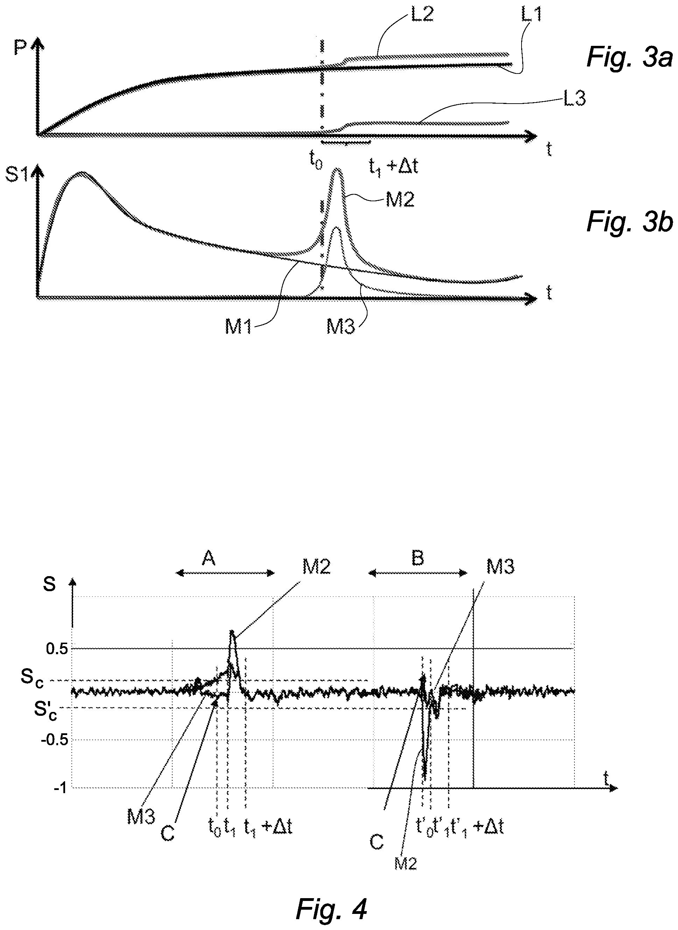

La vitesse de rotation N2 du moteur 4 est facilement mesurable et son effet sur la pression P(t), donc sur le signal S1(t), est modélisable. Pour retrouver la signature de la commutation de la vanne 1 dans le signal S1(t), il est donc possible de lui appliquer une méthode, dite de désensibilisation, dont le principe est illustré sur les figures 3a et 3b.

En référence à la figure 3a, une augmentation de vitesse N2, par exemple, entraîne une évolution de la pression P positive représentée par la courbe L1. Si, la vanne 1 est fermée à l'instant t₀, cela entraîne un saut de pression brusque mais d'amplitude faible par rapport aux variations de pression dans la phase d'accélération, ainsi que c'est représenté sur la courbe L2. Ce phénomène se retrouve amplifié si l'on considère, en référence à la figure 3b, les variations du signal S1(t) au sortir de l'étape E2, correspondant à la dérivée normalisée dP/P, représentées par les courbes M1 et M2, en correspondance avec les courbes L1 et L2. Tout d'abord, le pic de valeur observé sur la courbe M2 en début d'accélération est semblable à celui observé après le moment t₀ de fermeture de la vanne 1, voire plus grand. Un test de seuil peut donc confondre une accélération et une fermeture de la vanne 1. D'autre part, l'intensité du pic de M2 sur l'intervalle de temps [t₁, t₁ + Δt] suivant l'instant t₀ de la fermeture de la vanne 1 dépend de l'environnement.

Si l'on connaît la vitesse de rotation N2, la méthode de désensibilisation consiste à reconstituer par modélisation un signal SM(t) correspondant à la courbe M1, puis à soustraire le signal modélisé SM(t) du signal S1(t) obtenu par l'étape E2 et correspondant à la courbe M2. On obtient ainsi la courbe M3, représentée sur la figure 3b. Une opération similaire peut être faite sur la pression P(t) pour obtenir la courbe L3. Cependant, le résultat est particulièrement remarquable sur la courbe M3, représentant la dérivée normalisée et désensibilisée de la pression. En effet, le pic de valeur dû au démarrage de l'accélération a disparu.

De plus, la normalisation des signaux, c'est-à-dire le fait d'utiliser la dérivée temporelle de la grandeur mesurée divisée par la valeur de cette grandeur, pour la pression P et la vitesse de rotation N2, permet d'avoir une évolution en pourcentage et en particulier de supprimer les effets relatifs au niveau de pression P auquel on peut se trouver sur les courbes L1 ou L2, au moment de la fermeture de la vanne 1. Cela permet de définir plus simplement pour le test une valeur de seuil Sc, S'c, indépendamment des conditions de fonctionnement du moteur 4.

Le procédé selon l'invention utilise donc également une étape E3 d'acquisition de la vitesse de rotation N2(t) du moteur 4 au cours du temps. Ensuite, une étape E4, utilisant l'évolution temporelle N2(t) de cette vitesse de rotation et l'information provenant de l'étape E0 sur l'occurrence d'une commande C de fermeture ou d'ouverture de la vanne 1 au temps t₀, reconstitue, à l'aide d'un modèle, le signal SM(t) qui serait obtenu sur l'intervalle de temps [t₁, t₁ + Δt] sans commutation de la vanne 1. Cette étape E4 utilise de préférence des méthodes de filtrage analogues à celles qui sont utilisées dans l'étape E2 pour reconstituer la dérivée normalisée d'un paramètre à partir d'un échantillonnage de ce paramètre au cours du temps.

Le procédé comprend ensuite une étape E5, dite de désensibilisation, qui fournit une deuxième forme S2(t) du signal de dérivée de pression en soustrayant sur l'intervalle [t₁, t₁+Δt], le signal SM(t) à la première forme du signal S1 (t) obtenue en sortie de l'étape E2. On peut dire également que la forme de signal S2(t) est corrélée aux mouvements de la vanne 1 alors que la forme de signal précédente S1(t) comporte des informations parasites.

La figure 4 illustre les résultats obtenus avec ce procédé pour un cas de fonctionnement de l'installation décrite à la figure 2, au cours duquel, pendant un premier intervalle de temps A, une accélération de la vitesse de rotation N2 se superpose à une fermeture de la vanne 1 et, pendant un deuxième intervalle de temps B, une décélération de N2 se superpose à une ouverture de la vanne 1.

De manière similaire à ce qui a été présenté sur la figure 3b, la courbe M2 de la figure 4 représente l'évolution de la première forme de signal S1(t) au sortir de l'étape E2 et la courbe M3 représente l'évolution de la deuxième forme de signal S2(t), désensibilisée, obtenue en sortie de l'étape E5 pendant les intervalles de temps [t₁, t₁+Δt] suivant la commande C de vanne 1. On remarque que le pic causé par l'accélération est corrigé sur le signal S2(t) pour ne garder que celui causé par le mouvement de la vanne 1. Cette remarque vaut également pour la phase de décélération en B, durant l'intervalle [t'₁, t'₁+Δt] suivant l'ouverture de la vanne 1 en t'₀.

En sortie de l'étape E5, le procédé comprend une étape E6 qui applique le test de signature, décrit en référence aux figures 1a et 1b, à la deuxième forme de signal S2(t). En référence à la figure 4, l'étape E6 peut utiliser un seuil Sc ou S'c différent suivant que la commande C envoyée à la vanne 1 correspondait à une fermeture ou une ouverture.

L'étape suivante E7 détermine que la deuxième forme de signal S2(t) représente effectivement la réponse du système à un changement d'état de la vanne 1. Donc, si le test de signature relève un changement d'état de la vanne 1, l'étape E7 en conclut que la vanne 1 fonctionne correctement (S2=NP) et réinitialise le procédé à l'étape E0 pour surveiller la vanne 1 lors de la commande C de commutation suivante.

Si le test de signature ne relève pas de changement d'état de la vanne 1, l'étape E7 conclut à une panne (S2=P) de la vanne 1 et le procédé passe à l'étape E8 qui fournit l'information de panne sous une forme appropriée.

En référence à la figure 6, un système de détection de panne apte à mettre en oeuvre le procédé comprend un circuit électronique et des capteurs.

Une première branche du circuit est reliée au système de commande 11 de commutation de la vanne 1 et comprend un module horloge 12 qui détecte une commande C de fermeture ou d'ouverture de la vanne 1 à un instant t₀ et qui détermine les bornes de l'intervalle de temps [t₁, t₁+Δt] utilisé pour le test de signature.

Une deuxième branche du circuit électronique est reliée à un capteur de pression 10 dans les enceintes 2 d'huile et comprend un module 13 capable de filtrer et dériver le signal P(t) du capteur 10. Ce module 13, relié au module horloge 12, fournit en sortie la forme de signal S1(t) sur l'intervalle de temps [t₁, t₁+Δt].

Une troisième branche du circuit électronique est reliée à un capteur 14 de vitesse de rotation N2(t) sur l'arbre du moteur 4. Il comprend un module 15 capable de filtrer et dériver le signal N2(t) du capteur 14 pour fournir un signal normalisé à partir du signal fourni par le capteur 14. Ce résultat est ensuite utilisé par un module 16 de modélisation, qui fournit le signal SM(t) modélisant la réponse de l'installation en l'absence de mouvement de la vanne 1. Une façon de réaliser ce module 16 de modélisation consiste à appliquer des tables préalablement établies, avec des retards pour prendre en compte le temps d'établissement de la pression dans les enceintes 2 d'huile.

Le signal SM(t) sortant du module 16 de modélisation est soustrait du signal S1(t) par un module 17 effectuant les différences.

Un module test 18, recevant le signal S2(t) en sortie du module 17 effectuant les différences, relié au module horloge 12 et paramétré en fonction des seuils choisis Sc, S'c, effectue le test de signature sur l'intervalle de temps [t₁, t₁+Δt] après la commande C de la vanne 1 et envoie un résultat logique Ip de panne ou de fonctionnement à un module de contrôle 19, qui gère le déroulement du procédé et l'envoi des alarmes la.

### Deuxième mode de réalisation

Le deuxième exemple de mise en oeuvre de l'invention correspond à la surveillance d'une vanne de décharge 21 permettant de décharger un compresseur Haute Pression 22 dans certains cas de fonctionnement du moteur 23.

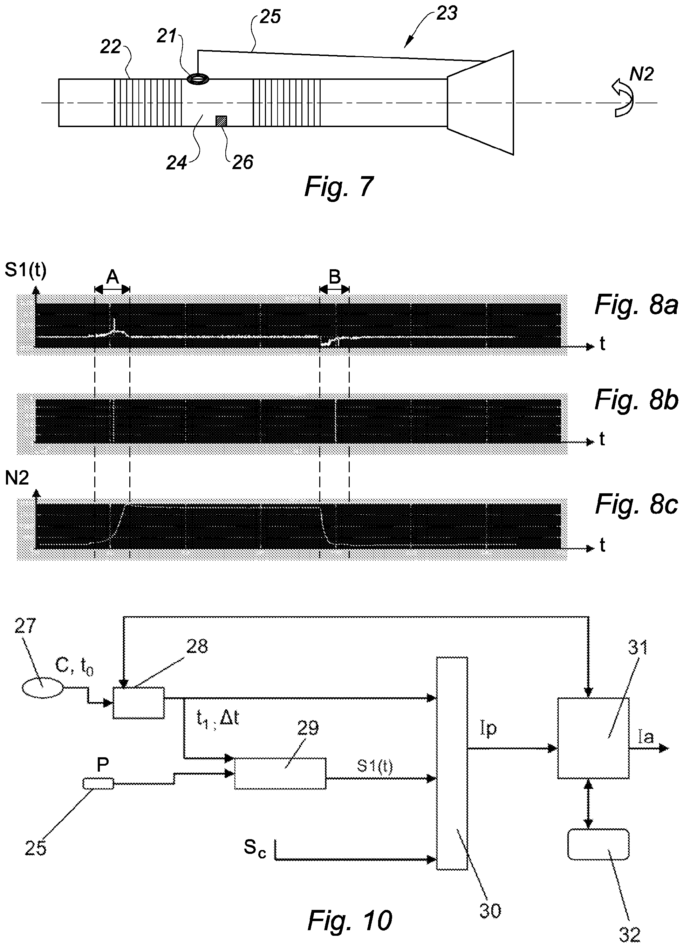

En référence à la figure 7, dans l'exemple considéré, cette vanne 21 est située dans la veine 24 de l'écoulement primaire, en aval d'un compresseur Haute Pression axial 22 généralement en amont d'un compresseur centrifuge non représenté sur la figure, avant les étages suivants du moteur. En s'ouvrant, cette vanne 21 communique avec un conduit 25 qui dérive une partie du flux primaire, généralement vers le flux secondaire. En fonction de la position des vannes de décharge 21, on peut augmenter la marge au pompage ou améliorer la consommation spécifique de carburant.

Chacune de ces vannes de décharge 21 est le plus souvent commandée en tout ou rien et du fait de sa situation dans un environnement très chaud, n'est en général pas équipée de mesure de position.

Cependant, comme cela a été évoqué en préambule, il est important de connaître l'état de fonctionnement de chacune des vannes de décharge 21 car dans certain cas, la panne peut rester dormante. La détection de panne permet donc d'intervenir avant que les effets de la panne n'aient des conséquences sur l'état du moteur 23.

L'ouverture ou la fermeture d'une vanne de décharge 21 en amont du compresseur 22 se traduit par une variation de pression P en sortie du compresseur 22. Un capteur de pression 26, généralement placé en sortie du compresseur 22, juste après la vanne de décharge 21, enregistre des changements brusques de niveau de pression P lors de l'ouverture ou de la fermeture de la vanne 21.

Le procédé selon l'invention commence donc par déterminer, comme dans le premier mode de réalisation, une première forme de signal S1(t) correspondant à la dérivée temporelle normalisée de la pression P mesurée par le capteur 26, sur un intervalle de temps [t₁, t₁+Δt] suivant l'instant t₀ de la commande C de la vanne 21.

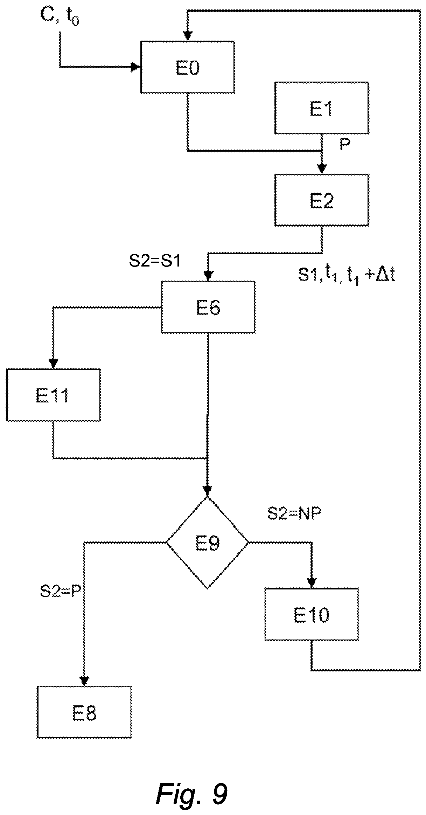

En référence à la figure 9, le procédé comprend donc également une étape E0 initiale consistant à enregistrer l'occurrence d'une commande C de commutation de la vanne 21 à un instant t₀. En parallèle, une première étape E1 consiste à mesurer la pression P(t) avec le capteur 26. Eventuellement, l'étape E1 est couplée à l'étape E0 pour ne démarrer les mesures que lorsqu'une commande C est envoyée.

Le procédé comporte ensuite une étape E2 qui fournit une première forme S1(t) du signal S(t) sur l'intervalle de temps [t₁, t₁+Δt]. Cette étape E2 est réalisée avec des techniques similaires à celles du premier mode de réalisation et comporte de préférence des filtrages.

Dans le cas d'une vanne de décharge 21, comme on peut le voir sur la figure 8a, la première forme de signal S1(t) sur la pression présente des pics de valeur importante lors d'une commutation de la vanne 21, indiquée à deux instants t₀, t'₀ sur la figure 8b. Cependant deux différences importantes de comportement du système amènent à modifier la façon dont le procédé détermine, à partir de S1(t), un signal S2(t) qu'il va définir comme étant corrélé à la commande C de commutation de la vanne 21.

La figure 8a présente l'évolution du signal S1(t) durant un premier intervalle de temps A dans lequel se superposent une fermeture de la vanne 21 et une forte accélération du régime N2 du moteur 23, puis durant un deuxième intervalle de temps B dans lequel se superposent une ouverture de la vanne 21 et une forte décélération du régime N2 du moteur 23. A ce propos, la figure 8c indique l'évolution de la vitesse de rotation N2 du moteur 23.

Ici, contrairement au cas précédent, le pic de valeur dans le cas d'une fermeture de la vanne 21 est nettement supérieur aux variations que peut entraîner une évolution, même rapide, du régime N2 du moteur 23. On peut donc fixer un seuil Sc suffisamment haut pour tester la fermeture de la vanne 21 sans se préoccuper des évolutions de la vitesse de rotation N2 du moteur 23. L'évolution de S1(t) dans le deuxième intervalle de temps B montre que ce n'est pas forcément le cas pour une ouverture de la vanne 21.

Le procédé n'utilise pas d'étape de désensibilisation et surveille uniquement les fermetures de la vanne 21. Il comporte donc, dans l'étape E0, une sélection qui ne démarre les observations que si la commutation correspond à une fermeture de la vanne 21.

Une deuxième différence, non illustrée sur les figures 8, vient du fait que le système peut être perturbé par des phénomènes qui ne sont pas suivis par le système de contrôle du moteur 23 et donc difficilement prévisibles. Il peut s'agir, par exemple, de l'ouverture ou la fermeture de vannes prélevant de l'air dans le circuit primaire pour réguler le système de pressurisation de la cabine de l'avion. De tels événements, ou simplement un mauvais fonctionnement du capteur 26, peuvent masquer la signature de fermeture de la vanne 21 lors du test sur le signal S1 (t), ou l'absence de cette signature.

Pour rendre plus robuste la détection de panne, en particulier pour éviter d'envoyer une fausse alarme de panne, le procédé introduit un comptage afin de déterminer un signal S2(t) dont il est sûr qu'il correspond à une réponse à une commande C de fermeture de la vanne 21.

Dans ce mode de réalisation, le signal S2(t) est pris égal, dans un premier temps, au signal S1(t). Le procédé comprend une étape E6 d'application du test de signature sur le signal S2(t) à la sortie de l'étape E2, en référence à la figure 9. Le test est appliqué de la même manière que celle appliquée au signal S2(t) sortant de l'étape E5 par le test de signature du procédé de la première réalisation, en référence à la figure 5. Le test fournit comme résultat la présence ou l'absence de signature d'une fermeture de la vanne 21 sur S2(t).

En sortie, une étape de surveillance E9 gère un compteur i. Ce compteur est mis à zéro au début de la mise en oeuvre du procédé. Ensuite, ce compteur i est incrémenté de 1 à chaque fois que la sortie de l'étape E6 de test de signature indique une absence de réponse sur le signal S2(t) et remis à zéro à chaque fois que le test de signature indique une réponse.

Ce compteur est ensuite comparé à un seuil n, prédéterminé, pour confirmer la panne s'il dépasse ce seuil.

Autrement dit, si le signal S2(t) testé au cours de l'étape E6 précédente correspond à une séquence de n+1 absences de réponse consécutives, alors il est considéré dans l'étape E9 de surveillance qu'il s'agit d'une forme de signal S2(t) effectivement corrélée à la commande vanne et qu'il correspond à une panne.

Sur l'exemple présenté, on utilise un seuil n égal à 1, ce qui correspond à deux absences de réponse consécutives. Des valeurs de seuil n plus grandes sont envisageables.

Dans ce cas, l'étape de surveillance E9 déclenche une étape E8 signalant une panne confirmée, similaire à celle du premier mode de réalisation.

Si le compteur i est non nul mais inférieur au seuil, il est considéré dans l'étape E9 que le signal S2(t) testé à la suite de la commande de vanne qui vient d'être envoyée n'est pas suffisamment corrélé avec cette commande. On sort donc de l'étape E9 pour continuer la surveillance du système sans passer par l'étape E8 signalant une panne confirmée.

Si le compteur i est nul, il n'est pas décidé explicitement dans l'étape de surveillance s'il y a ou non corrélation du signal mais l'on aboutit au même résultat que dans le cas précédent. On sort également de l'étape E9 en ne signalant pas de panne.

Dans une première variante du procédé représentée sur la figure 9, dans le cas où le compteur est non nul mais inférieur au seuil, il est possible, dans une étape E10 suivant l'étape de surveillance E9, de mettre en mémoire l'information pour signaler ultérieurement une panne non confirmée lors d'une opération de maintenance.

Dans une autre variante du procédé, si l'on veut vérifier que les cas de réponse à la commande de vanne sont bien avérés, il est possible d'installer dans l'étape de surveillance E9 une logique de comptage des séquences successives de résultats positifs au test de signature, similaire à celle qui vient d'être décrite pour le cas de non réponse.

Le seuil S_{c} et les délais déterminant l'intervalle [t₁, t₁+Δt] sont des paramètres préalablement définis pour le fonctionnement du procédé, en relation avec le fonctionnement du moteur 23.

En référence à la figure 10, un système de détection de panne apte à mettre en oeuvre le procédé comprend un circuit électronique et des capteurs.

Une première branche du circuit est reliée au système de commande de commutation 27 de la vanne 21. Il comprend un module horloge 28 qui détecte une commande C de fermeture de la vanne 21 à un instant t₀ et détermine les bornes de l'intervalle de temps [t₁, t₁+Δt] utilisé pour le test de signature.

Une deuxième branche du circuit électronique est reliée à un capteur 26 de pression P dans le circuit primaire du moteur 23, ainsi que cela a été indiqué dans la description du procédé, et comprend un module 29 capable de filtrer et dériver le signal P(t) du capteur 26. Ce module 29, relié au module horloge 28, fournit en sortie la forme de signal S1(t) sur l'intervalle de temps [t₁, t₁ + Δt].

Un module test 30, recevant le signal S1(t) en sortie du module 29 de calcul du signal S1(t), relié au module horloge 28 et paramétré en fonction du seuil S_{c} choisi, effectue le test de signature sur l'intervalle de temps [t₁, t₁+Δt] après la commande C de fermeture de la vanne 21 et envoie un résultat logique Ip de panne ou de fonctionnement à un module de contrôle 31.

Le module de contrôle 31 gère la logique décrite pour l'étape de surveillance en utilisant les résultats Ip successifs. Il envoie une alarme de panne la le cas échéant et peut commander la mise en mémoire des pannes confirmées ou non confirmées, selon les cas, dans une mémoire consultable 32.

### Autres variantes

Il entre dans l'invention d'intégrer des variantes pour tenir compte des particularités du système surveillé.

Par exemple, dans le deuxième mode de réalisation, l'étape E0 peut intégrer une détection d'ouverture de la vanne 21 afin d'inhiber le lancement des étapes suivantes dans le cas où deux commandes C se succèdent trop rapidement. En effet, si les deux commandes ont lieu dans un laps de temps trop court, la vanne 21 peut ne pas avoir eu le temps de s'ouvrir et cette variante permet d'éviter d'associer l'absence de signature à une panne de la vanne dans ce cas. Ce type de modification peut également intervenir dans le premier mode de réalisation.

L'invention concerne également une combinaison du premier et deuxième mode de réalisation, par exemple si l'on veut détecter la panne sur une ouverture de la vanne de décharge 21.

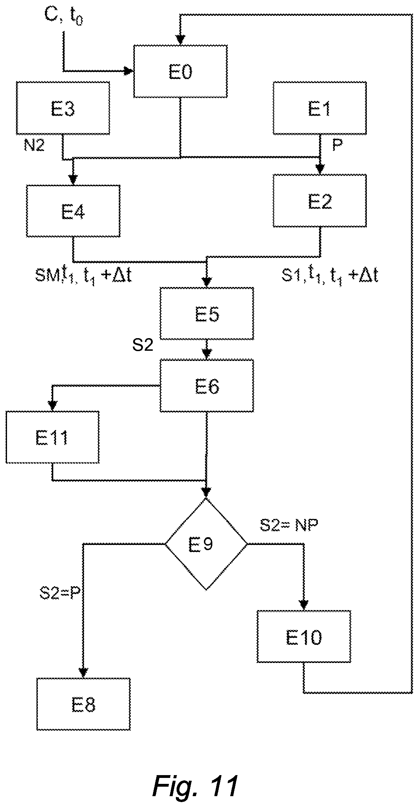

Dans ce cas, en référence à la figure 11, le procédé comprend les mêmes étapes que dans le deuxième mode de réalisation pour appliquer une logique de comptage et éviter de décréter une panne due à des évènements extérieurs non contrôlés. Cependant le procédé intègre également les étapes E3, E4 et E5 pour désensibiliser le signal S1(t) à l'influence du régime N2 du moteur 23 pour appliquer le test de signature dans l'étape E6 à un signal S2(t) désensibilisé.

## Revendications

1. Procédé de surveillance d'une vanne (1) dans un turbomoteur (4), ladite vanne (1) commutant, en fermeture et/ou ouverture, en réponse à une commande (C) envoyée à un instant déterminé (t₀), ledit procédé comportant :
- une étape (E2) de calcul d'une première forme (S1) d'un signal temporel (S(t)) à partir de l'évolution d'une variable d'état (P) dudit turbomoteur (4, 23) réagissant à une commutation de ladite vanne (1), puis
- une étape (E6) d'application d'un test de signature de la commutation de la vanne (1) à une deuxième forme (S2) dudit signal (S(t)) calculée à partir de ladite première forme (S1),
**caractérisé en ce que** ledit procédé comporte en outre
- une étape (E0) dans laquelle est défini un intervalle de temps ([t₁, t₁+Δt]) après l'envoi de ladite commande (C) pour effectuer ledit test de signature (E6),
- une étape (E3) d'acquisition d'un ou plusieurs autres paramètres (N2) que la commutation de la vanne (1),
- une étape (E4) de modélisation d'un signal (SM(t)) dudit signal temporel (S(t)) en réponse à une évolution dudit ou desdits autres paramètres (N2) pour calculer son évolution sans commutation de la vanne, et
- une étape (E5), dite de désensibilisation, dans laquelle ladite deuxième forme du signal (S2) est calculée à partir de la première forme (S1) du signal en lui retranchant l'évolution calculée (SM(t)) du signal (S(t)) à partir de l'évolution dudit ou desdits autres paramètres (N2), sur ledit intervalle de temps ([t₁, t₁+Δt]) après une commande (C).

2. Procédé selon la revendication précédente, dans lequel ledit signal (S(t)) représente la dérivée temporelle de ladite variable d'état (P(t)), de préférence filtrée.

3. Procédé selon la revendication précédente, dans lequel ladite variable d'état (P(t)) est une pression de gaz dans un circuit du turbomoteur (4, 23).

4. Procédé selon la revendication précédente, dans lequel la signature du fonctionnement de la vanne (1, 21) correspond au test de passage du signal (S(t)) par un pic de valeur devant dépasser un seuil déterminé (S_{c}, S'_{c}), dans un sens positif ou négatif.

5. Procédé selon l'une des revendications précédentes, dans lequel un délai (dt) déterminé est introduit entre l'envoi (t0) de la commande (C) de la commutation de vanne (1, 21) et ledit intervalle de temps ([t₁, t₁+Δt]).

6. Procédé selon l'une des revendications précédentes, comprenant un test dans l'étape (E0) de détermination de l'intervalle de temps pour ne pas lancer les étapes ultérieures si deux commandes (C) de commutation opposées de la vanne (21) se succèdent dans un laps de temps déterminé.

7. Procédé selon l'une des revendications précédentes, dans lequel une étape (E7) identifie l'éventuelle absence de réponse audit test de signature sur la deuxième forme S2 du signal, de manière à envoyer, lors d'une étape ultérieure (E8), une alarme de panne confirmée sur ladite vanne (1).

8. Procédé selon l'une des revendications 1 à 7, **caractérisé par le fait qu'**il comprend une étape (E9) dans laquelle une panne confirmée est identifiée si une absence de réponse a été obtenue dans l'étape (E6) d'application du test de signature pour une série de n commandes (C) consécutives incluant la commande en cours, n étant supérieur ou égal à deux, l'absence de panne confirmée est identifiée dans le cas contraire.

9. Procédé selon la revendication précédente, comportant une étape (E10) de mise en mémoire du résultat de l'étape (E6) d'application du test de signature.

10. Procédé selon l'une des revendications 1 à 9, dans lequel ladite vanne est une vanne de l'alimentation (1) d'une trompe à jet (6) dépressurisant au moins une enceinte (2) d'huile du turbomoteur, la variable d'état est la pression (P) dans un circuit d'alimentation en huile de ladite enceinte ladite enceinte (2), et l'autre paramètre influençant ledit signal (S(t)) est la vitesse de rotation (N2) du turbomoteur (4).

## Patentansprüche

1. Verfahren zur Überwachung eines Ventils (1) in einem Turbinenmotor (4), wobei das Ventil (1) auf Schließung und/oder Öffnung schaltet, in Antwort auf einen Befehl (C), der zu einem bestimmten Zeitpunkt (t₀) gesendet wird, wobei das Verfahren umfasst:
- einen Schritt (E2) des Berechnens einer ersten Form (S1) eines Zeitsignals (S(t)) ausgehend von dem Verlauf einer Zustandsvariablen (P) des Turbinenmotors (4, 23), die auf eine Schaltung des Ventils (1) reagiert, dann
- einen Schritt (E6) des Anwendens einer Signaturprüfung der Schaltung des Ventils (1) auf eine zweite Form (S2) des Signals (S(t)), die ausgehend von der ersten Form (S1) berechnet wird,
**dadurch gekennzeichnet, dass** das Verfahren weiter umfasst
- einen Schritt (E0), bei dem ein Zeitintervall ([t1, t1+Δt]) nach dem Senden des Befehls (C) definiert wird, um die Signaturprüfung (E6) durchzuführen,
- einen Schritt (E3) des Erfassens von einem oder mehreren anderen Parametern (N2), die sich von der Schaltung des Ventils (1) unterscheiden,
- einen Schritt (E4) des Modellierens eines Signals (SM(t)) von dem Zeitsignal (S(t)) in Antwort auf einen Verlauf des oder der anderen Parameter (N2), um seinen Verlauf ohne Schaltung des Ventils zu berechnen, und
- einen Schritt (E5) des so genannten Desensibilisierens, bei dem die zweite Form des Signals (S2) ausgehend von der ersten Form (S1) des Signals berechnet wird, indem ihm der berechnete Verlauf (SM(t)) des Signals (S(t)) ausgehend von dem Verlauf des oder der anderen Parameter (N2) abgezogen wird, über das Zeitintervall ([t1, t1+Δt]) nach einem Befehl (C).

2. Verfahren nach dem vorstehenden Anspruch, wobei das Signal (S(t)) die zeitliche Ableitung der Zustandsvariablen (P(t)), vorzugsweise gefiltert, darstellt.

3. Verfahren nach dem vorstehenden Anspruch, wobei die Zustandsvariable (P(t)) ein Gasdruck in einem Kreislauf des Turbinenmotors (4, 23) ist.

4. Verfahren nach dem vorstehenden Anspruch, wobei die Signatur der Funktionsfähigkeit des Ventils (1, 21) einer Prüfung des Durchlaufs des Signals (S(t)) durch einen Spitzenwert entspricht, der eine bestimmte Grenze (S_{c}, S'_{c}) in positiver oder negativer Richtung übersteigen muss.

5. Verfahren nach einem der vorstehenden Ansprüche, wobei eine bestimmte Verzögerung (dt) zwischen dem Senden (t0) des Befehls (C) zur Schaltung des Ventils (1, 21) und dem Zeitintervall ([t1, t1+Δt]) eingefügt wird.

6. Verfahren nach einem der vorstehenden Ansprüche, umfassend eine Prüfung im Schritt (E0) des Bestimmens des Zeitintervalls, um die nachfolgenden Schritte nicht zu starten, wenn zwei widersprüchliche Befehle (C) zur Schaltung des Ventils (21) innerhalb einer bestimmten Zeitspanne aufeinander folgen.

7. Verfahren nach einem der vorstehenden Ansprüche, wobei ein Schritt (E7) das eventuelle Fehlen einer Antwort auf die Signaturprüfung auf die zweite Form S2 des Signals identifiziert, so dass bei einem nachfolgenden Schritt (E8) ein Alarm für einen bestätigten Fehler an dem Ventil (1) gesendet wird.

8. Verfahren nach einem der Ansprüche 1 bis 7, **dadurch gekennzeichnet, dass** es einen Schritt (E9) umfasst, bei dem ein bestätigter Fehler identifiziert wird, wenn ein Fehlen einer Antwort in Schritt (E6) des Anwendens der Signaturprüfung für eine Reihe von n aufeinander folgenden Befehlen (C), einschließlich des laufenden Befehls, erhalten wurde, wobei n größer oder gleich zwei ist, das Fehlen eines bestätigten Fehlers im gegenteiligen Fall identifiziert wird.

9. Verfahren nach dem vorstehenden Anspruch, umfassend einen Schritt (E10) des Speicherns des Ergebnisses von Schritt (E6) des Anwendens der Signaturprüfung.

10. Verfahren nach einem der Ansprüche 1 bis 9, wobei das Ventil ein Versorgungsventil (1) einer Strahlpumpe (6) zur Druckentlastung mindestens eines Ölbehälters (2) des Turbinenmotors ist, die Zustandsvariable der Druck (P) in einem Ölversorgungskreislauf des Behälters (2) ist, und der andere Parameter, der das Signal (S(t)) beeinflusst, die Drehzahl (N2) des Turbinenmotors (4) ist.

## Claims

1. Method of monitoring a valve (1) in a turboshaft engine (4), said valve (1) switching, by closing and/or opening, in response to a control instruction (C) sent at a determined instant (t₀), said method comprising :
- a step (E2) of calculating a first form (S1) of a time signal (S(t)) from the change in a status variable (P) of said turboshaft engine (4, 23) reacting to a switching of said valve (1), then
- a step (E6) of applying a signature test of the switching of the valve (1) to a second form (S2) of said signal (S(t)) calculated from said first form (S1), **characterised in that** said method also comprises
- a step (E0) in which a time interval ([t₁, t₁+Δt]) is defined after sending said control instruction (C) to perform said signature test (E6),
- a step (E3) of acquiring one or more parameters (N2) other than the switching of the valve (1),
- a step (E4) of modelling of a signal (SM(t)) of said time signal (S(t)) in response to a change in said other parameter(s) (N2) to calculate its change without switching of said vane, and
- a step (E5), known as the desensitisation step, in which said second form (S2) of the signal is calculated from the first form (S1) of the signal by subtracting therefrom the change (SM(t)) in the signal (S(t)) calculated from the change in said other parameter(s) (N2), over said time interval ([t₁, t₁+Δt]) following a control instruction (C).

2. Method according to the preceding claim, in which said signal (S(t)) represents the time derivative of said status variable (P(t)), preferably filtered.

3. Method according to the preceding claim, in which said status variable (P(t)) is a gas pressure in a turboshaft engine circuit (4, 23).

4. Method according to the preceding claim, in which the operating signature of the valve (1, 21) corresponds to the test of the signal (S(t)) passing through a peak value that must exceed a given threshold (S_{c}, S'_{c}), in a positive or negative direction.

5. Method according to any of the preceding claims, in which a given period (dt) is introduced between the sending (t0) of the control instruction (C) to switch the valve (1, 21) and said time interval ([t₁, t₁+Δt]).

6. Method according to any of the preceding claims, comprising a test in step (E0) to determine the time interval for not launching the subsequent steps if two opposite switching control instructions (C) of the valve (21) succeed one another within a given time period.

7. Method according to any of the preceding claims, in which a step (E7) identifies the possible absence of a response to said signature test on the second form (S2) of the signal, in order to send, during a subsequent step (E8), a confirmed malfunction alarm on said valve (1).

8. Method according any of claims 1 to 7, **characterised in that** it comprises a step (E9) in which a confirmed malfunction is identified if no response has been obtained in step (E6) of applying the signature test for a series of n consecutive control instructions (C) including the current control instruction, n being greater than or equal to two, the absence of a confirmed malfunction being identified in the contrary case.

9. Method according to the preceding claim, comprising a step (E10) of storing in memory the result of step (E6) of applying the signature test.

10. Method according to any of claims 1 to 9, in which said valve is a valve (1) supplying a jet ejector (6) that depressurises at least one oil chamber (2) of the turboshaft engine, the status variable is the pressure (P) in an oil supply circuit of said chamber (2), and the other parameter influencing said signal (S(t)) is the rotational speed (N2) of the turboshaft engine (4).
